# EUROPÄISCHE PATENTSCHRIFT

(11) **EP 1 372 934 B1**
(45) Veröffentlichungstag und Bekanntmachung des Hinweises auf die Patenterteilung: **23.11.2005**
(21) Anmeldenummer: 02703620.1
(22) Anmeldetag: 05.03.2002
(51) Int. Cl.: B29C 45/78

(54) **VERFAHREN ZUR AUTOMATISCHEN BALANCIERUNG DER VOLUMETRISCHEN FÜLLUNG VON KAVITÄTEN**
METHOD FOR AUTOMATICALLY BALANCING THE VOLUMETRIC FILLING OF CAVITIES
PROCEDE D'EQUILIBRAGE AUTOMATIQUE DU REMPLISSAGE VOLUMETRIQUE DE CAVITES

(30) Priorität: 14.03.2001 DE 10112126
(43) Veröffentlichungstag der Anmeldung: 02.01.2004
(73) Patentinhaber: Priamus System Technologies AG, 8200 Schaffhausen (CH)
(72) Erfinder: FREY, Jürgen, 73230 Kirchheim/Teck (DE)
(74) Vertreter: Weiss, Peter
(86) Internationale Anmeldenummer: PCT/EP2002/002360
(87) Internationale Veröffentlichungsnummer: WO 2002/072331

(56) Entgegenhaltungen:
- DE-A- 4 234 119
- PATENT ABSTRACTS OF JAPAN vol. 7, no. 137 (M-222), 15. Juni 1983 (1983-06-15) & JP 58 051126 A (TOSHIBA KIKAI KK), 25. März 1983 (1983-03-25)
- PATENT ABSTRACTS OF JAPAN vol. 6, no. 26 (M-112), 16. Februar 1982 (1982-02-16) & JP 56 144939 A (MATSUSHITA ELECTRIC WORKS LTD), 11. November 1981 (1981-11-11)
- PATENT ABSTRACTS OF JAPAN vol. 13, no. 76 (M-800), 21. Februar 1989 (1989-02-21) & JP 63 274517 A (MITSUBISHI ELECTRIC CORP), 11. November 1988 (1988-11-11)
- PATENT ABSTRACTS OF JAPAN vol. 1996, no. 8, 30. August 1996 (1996-08-30) & JP 08 090622 A (NEC TOHOKU LTD), 9. April 1996 (1996-04-09)

## Beschreibung

Die Erfindung betrifft ein Verfahren zur automatischen Balancierung der volumetrischen Füllung von Kavitäten, insbesondere von Mehrfach-Spritzgiesswerkzeugen, sowie ein entsprechendes Mehrfach-Spritzgiesswerkzeug.

Aus der JP-A-63 274517 ist es bekannt, während und nach dem Füllen der Kavität die Temperatur zu messen. Hierdurch wird die vollständige Füllung der Form ermittelt.

Bei der Herstellung von Spritzgiessteilen aller Art, beispielsweise aus Kunststoff, Metall, Keramik usw., werden häufig aus Kostengründen mehrere Teile pro Spritzzyklus gleichzeitig hergestellt. Hierzu werden Mehrfachwerkzeuge benutzt, wobei die einzelnen Kavitäten normalerweise bezüglich Geometrie und Anschnittpunkten so weit ausblanciert werden, dass eine möglichst gleichmässig Füllung erzielt wird.

In der Praxis ist jedoch die Füllung der einzelnen Kavitäten auf Grund von Material-, Temperatur- und daraus resultierenden Viskositätsschwankungen der Spritzmasse stets unterschiedlich und ändert sich auch ständig. Um eine gleichbleibende Qualitätskonstanz der Spritzteile zu erreichen, muss deshalb permanent die volumetrische Füllung der einzelnen Kavitäten überprüft und, wenn notwendig, geregelt werden. Eine Regelung der volumetrischen Füllung ist grundsätzlich möglich, indem die individuellen Heisskanaltemperaturen der einzelnen Kavitäten verändert werden.

In der US-A-6 090 318 wird ein Verfahren zur Regelung der Heisskanalheizung eines Mehrkavitäten-Spritzwerkzeuges beschrieben, wobei die Verläufe des Werkzeuginnendruckes in allen Kavitäten aufgenommen und die Zeiten vom Beginn des Füllvorganges bis zum Erreichen eines geeignet gewählten Referenzdruckes für jede Kavität gemessen werden. Durch Eingriffe in die individuellen Heizungen der einzelnen Heisskanäle werden die Temperaturen in diesen Kanälen so verändert, dass sich die gemessenen Zeiten der einzelnen Kavitäten einander annähern.

Ein grundsätzlicher Nachteil dieses Verfahrens liegt in den hohen Kosten des Systems für die Sensorik und die Verstärker. Ferner wird der zeitliche Druckverlauf der einzelnen Druckkurven mit Mittelswertskurven verglichen, was ein detailliertes Prozesswissen voraussetzt und einen universellen Einsatz erschwert.

Der vorliegenden Erfindung liegt die Aufgabe zugrunde, das oben genannte Verfahren wesentlich zu vereinfachen und eine deutliche Kostenreduzierung zu erreichen.

Zur Lösung dieser Aufgabe führt, dass der Temperaturverlauf in den Kavitäten ermittelt und für alle Kavitäten vergleichmässigt wird.

Damit zeigt das Verfahren die Möglichkeit auf, den Zeitversatz der einzelnen Signale, die Maximalwerte einzelner Signale sowie Integralwerte mit Hilfe von Temperatursignalen zu erfassen und als Regelparameter zu nutzen. Mehrkanalige Temperatur-Messsysteme sind wesentlich günstiger und unempfindlicher als Druck-Messsysteme.

Die wesentliche Information der Regelung eines Heisskanal-Mehrfachwerkzeuges ist der zeitliche Versatz der Signale. Ist der Anstieg der Signale der einzelnen Kavitäten identisch, sind diese automatisch gleichzeitig volumetrisch gefüllt.

Bevorzugt wird die Temperatur am Ende des Füllweges ermittelt, d.h. bevorzugt nach 95-98 % des Füllweges. Hier unterscheidet sich das erfindungsgemässe Verfahren ebenfalls von den bekannten Verfahren der Ermittlung durch Drucksensoren. Der Druck in der Kavität kann sich auch erhöhen, ohne dass die Kavität ganz gefüllt ist. Der Temperaturverlauf am Ende des Füllweges kann aber nur erreicht werden, wenn auch gleichzeitig eine vollständige Füllung des Formhohlraumes stattfindet.

Bevorzugt erfolgt die Darstellung des Temperaturverlaufes am Ende des Füllweges für das Bedienpersonal auf einem Display, wobei der aktuelle Temperaturverlauf über einem Referenzwert dargestellt wird. Als Referenzwert dient der mittlere Temperaturanstieg aller beobachteter Kavitäten. Ergeben sich hier Abweichungen von dem Referenzwert, so wird dies deutlich angezeigt, indem der Kurvenverlauf nicht mehr als eine Gerade dargestellt wird. Erst bei balancierter, geregelter Übereinstimmung zwischen tatsächlichem Temperaturverlauf und Referenzwert ergibt sich eine 45°-Gerade.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt durch ein Spritzgiesswerkzeug;
Figur 2 ein Diagramm des Druckverlaufs in einzelnen Kavitäten eines Mehrfachspritzwerkzeuges.

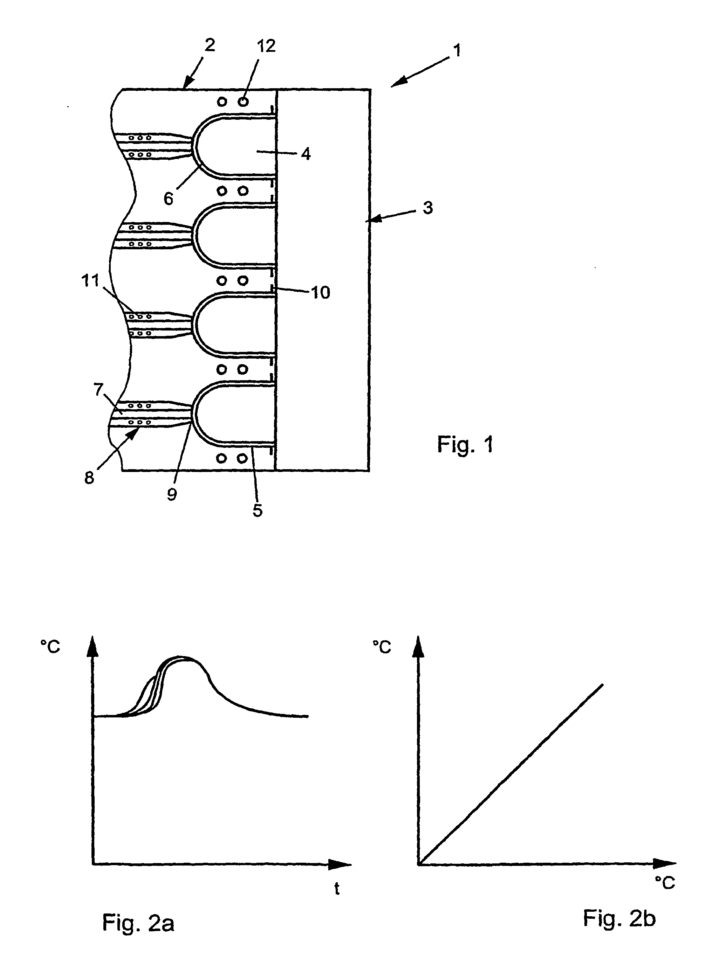

In Figur 1 ist ein geschlossenes Spritzgiesswerkzeug 1 dargestellt. Es besteht im Wesentlichen aus zwei Formplatten 2 und 3, wobei von der Formplatte 3 Kerne 4 abstehen, welche in Schliesslage in Kavitäten 5 in der Formplatte 2 eingreifen. Kerne 4 und Kavitäten 5 bilden zusammen jeweils einen Formhohlraum 6, welcher beispielsweise von einer Kunststoffschmelze gefüllt werden kann. Diese wird durch einen Heisskanal 7 einer Düse 8 herbeigebracht und in den Formhohlraum 6 an einem Anguss 9 eingespritzt.

Erfindungsgemäss ist bevorzugt jeder Kavität 5 zumindest ein Temperatursensor 10 zugeordnet. Dieser Temperatursensor 10 befindet sich am Ende des Füllweges der Kavität 5, bevorzugt etwa bei 95-98 % des Füllweges der Kavität.

In den Düsen 8 befinden sich Heizkanäle 11, durch welche eine Kunststoffschmelze im Heisskanal 7 auf einer gewünschten Temperatur gehalten wird. Dagegen befinden sich in der Formplatte 2 im Bereich der Kavitäten 5 Kühlkanäle 12, welche wiederum den Kunststoff in dem Formhohlraum 6 auf eine gewünschte Temperatur bringen, damit er dort nach einem gewünschten Zeitraum erstarrt und der geformte Gegenstand aus der Kavität 5 entnommen werden kann.

Die Funktionsweise der vorliegenden Erfindung ist folgende:

Über die Düse 8 bzw. den Heisskanal 7 wird in jeden Formhohlraum 6 Kunststoff eingespritzt. Durch die Temperatursensoren 10 wird der Temperaturverlauf in der Kavität 5 am Ende des Füllweges ermittelt. Gemäss Figur 2a steigt die Temperatur bei Ankunft der Kunststoffschmelze am Ende der Kavität an und fällt dann infolge Abkühlung mittels eines Kühlmediums in den Kühlkanälen 12 wieder ab.

Dabei hat sich gezeigt, dass der Temperaturverlauf in den einzelnen Kavitäten 5 unterschiedlich sein kann, was nicht wünschenswert ist. Wünschenswert ist dagegen eine Vergleichmässigung der Temperatur von einem Minimalwert zu einem Maximalwert. Das bedeutet, dass ein mittlerer Temperaturanstieg als Referenz genommen wird und über dieser Referenz der tatsächliche Temperaturanstieg jeder Kavität aufgetragen wird. Stimmt der Temperaturanstieg jeder Kavität mit dem mittleren Temperaturanstieg überein, so erhält man eine 45°-Gerade, wie dies in Figur 2b gezeigt ist. Weichen dagegen die Temperaturverläufe von dem Referenzwert ab, so ergibt dies für jede Kavität eine andere Kurve gegenüber der Geraden in Figur 2b.

Das Messen der Temperatur am Ende des Füllweges bedeutet auch gleichzeitig einen Hinweis darauf, ob alle Formhohlräume eines Mehrfachwerkzeuges gleichzeitig vollständig gefüllt werden. Dies ein weiterer wesentlicher Unterschied zu den bekannten Verfahren.

| Positionszahlenliste | | | | | |
|---|---|---|---|---|---|
| 1 | Spritzgiesswerkzeug | 34 | | 67 | |
| 2 | Formplatte | 35 | | 68 | |
| 3 | Formplatte | 36 | | 69 | |
| 4 | Kerne | 37 | | 70 | |
| 5 | Kavität | 38 | | 71 | |
| 6 | Formhohlraum | 39 | | 72 | |
| 7 | Heisskanal | 40 | | 73 | |
| 8 | Düse | 41 | | 74 | |
| 9 | Anguss | 42 | | 75 | |
| 10 | Temperatursensor | 43 | | 76 | |
| 11 | Heizkanal | 44 | | 77 | |
| 12 | Kühlkanal | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur automatischen Balancierung der volumetrischen Füllung von Kavitäten (5), insbesondere von Mehrfach-Spritzgiesswerkzeugen (1),
**dadurch gekennzeichnet,**
**dass** der Temperaturverlauf in den Kavitäten (5) ermittelt und für alle Kavitäten (5) vergleichmässigt wird.

2. Verfahren nach Anspruch 1, **dadurch gekennzeichnet, dass** die Temperatur am Ende des Füllweges, bevorzugt 95 - 98 % des Füllweges, ermittelt wird.

3. Verfahren nach Anspruch 1 oder 2, **dadurch gekennzeichnet, dass** ein mittlerer Temperaturanstieg von allen Kavitäten (5) als Referenz genommen und die Abweichung der einzelnen Kavität von diesem Referenzwert ermittelt und diese Abweichung durch Beeinflussung der Temperatur jeder Kavität (5) dem Referenzwert angeglichen wird.

4. Verfahren nach Anspruch 3, **dadurch gekennzeichnet, dass** die aktuellen Temperaturdaten über den Referenzdaten zeitunabhängig aufgetragen werden, so dass sich bei optimaler Übereinstimmung eine 45°-Gerade ergibt, bzw. bei Nichtübereinstimmung durch Veränderung der Temperatur eine 45°-Gerade angestrebt wird.

## Claims

1. Method of automatically balancing the volumetric filling of cavities (5), more especially of multiple injection-moulding tools (1), **characterised in that** the temperature profile in the cavities (5) is determined and is distributed evenly for all of the cavities (5).

2. Method according to claim 1, **characterised in that** the temperature at the end of the filling path, preferably 95 - 98 % of the filling path, is determined.

3. Method according to claim 1 or 2, **characterised in that** an average rise in temperature of all of the cavities (5) is taken as the reference, and the deviation of the individual cavity from this reference value is determined, and this deviation is adapted to the reference value by influencing the temperature of each cavity (5).

4. Method according to claim 3, **characterised in that** the actual temperature data are plotted over the reference data independently of time, so that, in the event of optimum conformity, a 45° straight line is produced or respectively, in the event of non-conformity, a 45° straight line is sought by changing the temperature.

## Revendications

1. Procédé d'équilibrage automatique du remplissage volumétrique de cavités (5), en particulier de moules à injection à cavités multiples (1),
**caractérisé par le fait**
**que** l'évolution de la température dans les cavités (5) est déterminée et uniformisée pour toutes les cavités (5).

2. Procédé selon la revendication 1, **caractérisé par le fait que** la température est déterminée à la fin du trajet de remplissage, de préférence à de 95 à 98 % du trajet de remplissage.

3. Procédé selon la revendication 1 ou 2, **caractérisé par le fait qu'**une élévation de température moyenne de toutes les cavités (5) est prise comme référence et qu'il est déterminé une déviation des cavités individuelles par rapport à cette valeur de référence et que cette déviation est adaptée à la valeur de référence en influençant la température de chaque cavité (5).

4. Procédé selon la revendication 3, **caractérisé par le fait que** les données de température sont superposées aux données de référence indépendamment du temps, de sorte qu'il soit obtenu, en cas de coïncidence optimale, une droite de 45° ou qu'il soit recherché, en cas de non coïncidence, une droite de 45°, en modifiant la température.
